(19) Europäisches Patentamt
European Patent Office
Office européen des brevets

(11) **EP 1 981 747 B1**

(12) **EUROPÄISCHE PATENTSCHRIFT**

(45) Veröffentlichungstag und Bekanntmachung des Hinweises auf die Patenterteilung:
**23.09.2009 Patentblatt 2009/39**

(21) Anmeldenummer: **07703016.1**

(22) Anmeldetag: **25.01.2007**

(51) Int Cl.:
**B60T 8/36** (2006.01)      **F16K 31/06** (2006.01)

(86) Internationale Anmeldenummer:
**PCT/EP2007/000619**

(87) Internationale Veröffentlichungsnummer:
**WO 2007/085442 (02.08.2007 Gazette 2007/31)**

(54) **VERFAHREN ZUR ANSTEUERUNG EINES ELEKTROMAGNETISCHEN VENTILS**

METHOD FOR ACTUATING AN ELECTROMAGNETIC VALVE

PROCÉDÉ POUR COMMANDER UNE ÉLECTROVANNE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.01.2006  DE 102006003745**

(43) Veröffentlichungstag der Anmeldung:
**22.10.2008 Patentblatt 2008/43**

(73) Patentinhaber: **KNORR-BREMSE Systeme für Nutzfahrzeuge GmbH
80809 München (DE)**

(72) Erfinder:
• **BEYSE, Thorsten
71701 Schwieberdingen (DE)**
• **DEEG, Markus
71735 Eberdingen (DE)**

(74) Vertreter: **Mattusch, Gundula
Knorr-Bremse AG,
Patentabteilung V/RG
Moosacher Strasse 80
80809 München (DE)**

(56) Entgegenhaltungen:
**EP-A2- 0 933 274          WO-A-94/19810
DE-A1- 4 205 563          DE-A1- 10 059 348
DE-A1- 19 742 038**

EP 1 981 747 B1

**Beschreibung**

Stand der Technik

Die Erfindung geht aus von einem Verfahren zur Ansteuerung wenigstens eines elektromagnetischen Ventils beinhaltend wenigstens eine mittels eines Erregerstroms erregbare Spule und einen Anker, wobei der Erregerstrom derart einstellbar ist, dass er auf ein Signal zum Stellen des Ankers von einer Stellung in eine andere Stellung hin die Ankerbewegung durch Überschreiten einer Erregerstromschwelle hervorruft und zum Halten des Ankers in einer bestimmten Stellung auf einem demgegenüber niedrigeren Wert gehalten wird, gemäß dem Oberbegriff von Anspruch 1.

Ein gattungsgemäßes Verfahren ist beispielsweise in der DE 197 42 038 A1 oder in der WO 94/19810 A beschrieben.

Bei solchen elektromagnetischen Ventilen kann es sich um Schaltventile oder um Proportionalventile handeln. Elektromagnetische Schaltventile wie beispielsweise 2/2-Wegeventile oder 3/2-Wegeventile wie sie in Anti-Blockier-Systemen (ABS) oder Elektronischen Bremssystemen (EBS) von Fahrzeugen verwendet werden, verfügen im allgemeinen über eine von einem Erregerstrom erregbare elektromagnetische Spule. Zum Umschalten dieser Ventile von einer Schaltstellung in eine andere Schaltstellung auf ein Stellsignal oder eine Schaltanforderung hin, welche von einem elektronischen Steuergerät ausgesteuert wird, muss der Erregerstrom eine gewisse Erregerstromschwelle überschreiten, um eine entsprechende Ankerbewegung hervorrufen zu können. Bei einem Erregerstrom unterhalb dieser Erregerstromschwelle findet jedoch kein Umschalten statt. Um den Anker gegen die Wirkung einer Rückstellfeder dann in seiner Schaltstellung zu halten, ist ein gegenüber der Erregerstromschaltschwelle niedrigerer Erregerstrom ausreichend.

Allgemein hängt der durch die Spule eines solchen elektromagnetischen Ventils hindurch fließende Strom von der Umgebungstemperatur ab. Da bei tiefen Temperaturen der ohm'sche Widerstand der Spule kleiner als bei höheren Temperaturen ist, ist der die Spule durchfließende Strom bei tiefen Temperaturen größer als bei höheren Temperaturen.

Aus dem Stand der Technik sind aus mehreren solcher elektromagnetischer Schaltventile gebildete Steuergeräte bekannt, insbesondere Steuergeräte von Anti-Blockier-Systemen (ABS). Wenn ein solches Steuergerät in ein Fahrzeug eingebaut ist und das Fahrzeug beispielsweise beim Einsatz in polaren Regionen sehr tiefen Temperaturen ausgesetzt wird, fließen bei vorgegebener Spannung aufgrund des dann sehr geringen ohm'schen Widerstands der Spulen insbesondere bei gleichzeitigem Erregen aller Magnetventile des Steuergeräts relativ hohe Ströme. Bei einer Umgebungstempertur von - 40°C fließen durch die Spule eines ABS-Magnetventils beispielsweise 3,3 Ampere. Diese hohen Ströme können die elektrische Verkabelung des Steuergeräts beschädigen und/oder eine elektrische Sicherung auslösen.

Die EP 0 933 274 A2 offenbart eine hydraulische Bremsanlage mit Magnetventilen, welche den Fluss von Hydraulikflüssigkeit zu und von druckmittelbetätigten Bremsaktuatoren steuern. Mittels der Magnetventile wird das Hydraulikfluid erwärmt, um die Viskosität des Fluids zu reduzieren.

Die DE 100 59 348 A1 beschreibt ein Verfahren zur Ansteuerung einer Bremsvorrichtung, bei dem für hydraulische Steuerungsfunktionen notwendige Ventilspulen zwecks einer elektrischen Beheizung eines oder mehrerer diese Spulen aufnehmender Träger angesteuert werden.

Der vorliegenden Erfindung liegt demgegenüber die Aufgabe zugrunde, ein Verfahren der eingangs erwähnten Art derart weiter zu entwickeln, dass auch bei sehr niedrigen Temperaturen die durch die Spule eines elektromagnetischen Ventils fließenden Ströme beschränkt werden.

Diese Aufgabe wird erfindungsgemäß durch die Merkmale von Anspruch 1 gelöst.

Offenbarung der Erfindung

Die Erfindung beruht auf dem Gedanken, ein elektromagnetisches Ventil auch dann mit einem Erregerstrom größter als Null, aber unterhalb der Erregerstromschwelle zu versorgen, wenn keine Anforderung zum Stellen oder zum Halten des Ankers vorliegt. Denn die Bestromung der Spule erzeugt Wärme in deren Windungen, wodurch ihr ohm'scher Widerstand ansteigt, was wiederum geringere Ströme durch die Spule zur Folge hat. Der Zweck der Bestromung der Spule gemäß der Erfindung liegt folglich darin, den Strom durch die Spule für künftige Anforderungen zum Stellen oder Haften des Ankers zu reduzieren.

Sind mehrere solcher Ventile in einer Baueinheit, beispielsweise in einem Steuergerät zusammengefasst, ergibt sich eine vorteilhaft niedrige Strombelastung der elektrischen Verkabelung auch bei sehr niedrigen Umgebungstemperaturen. Außerdem sinkt die Wahrscheinlichkeit, dass eine Sicherung ausgelöst wird. Dadurch, dass der lediglich zu Heizzwecken zugeführte Erregerstrom stets unterhalb der Erregerstromschwelle liegt, wird ein ungewolltes Umschalten des Schaltventils vermieden.

Die Beaufschlagung der Spule mit dem Erregerstrom erfolgt in einem gewissen Zeitabstand nach Beenden einer Haltephase des Ankers. Dann ist sichergestellt, dass der Anker wieder in seine Ausgangsschaltstellung zurückgekehrt ist und die Haltephase durch den Heizstrom nicht beeinflusst wird.

Durch die in den Unteransprüchen aufgeführten Maßnahmen sind vorteilhafte Weiterbildungen und Verbesserungen der im Anspruch 1 angegebenen Erfindung möglich.

Besonders bevorzugt erfolgt die Beaufschlagung der Spule mit einem Erregerstrom unterhalb der Erregerstromschwelle abhängig von der Umgebungstemperatur. Insbesondere wenn die Umgebungstemperatur eine untere Grenztemperatur unterschreitet, wird die Spule durch den Erregerstrom beheizt, ohne jedoch eine Ankerbewegung hervorzurufen.

Sehr vorteilhaft ist auch eine Ansteuerung zu Heizzwecken vor einer ersten funktionsbedingten Ansteuerung, wenn die Temperatur des Ventils gleich der Umgebungstemperatur ist. Die Bestromung des Ventils zu Heizzwecken kann beispielsweise durch Einschalten der Zündung bei einem Kraftfahrzeug ausgelöst werden.

Genaueres geht aus der folgenden Beschreibung eines Ausführungsbeispiels hervor.

Zeichnung

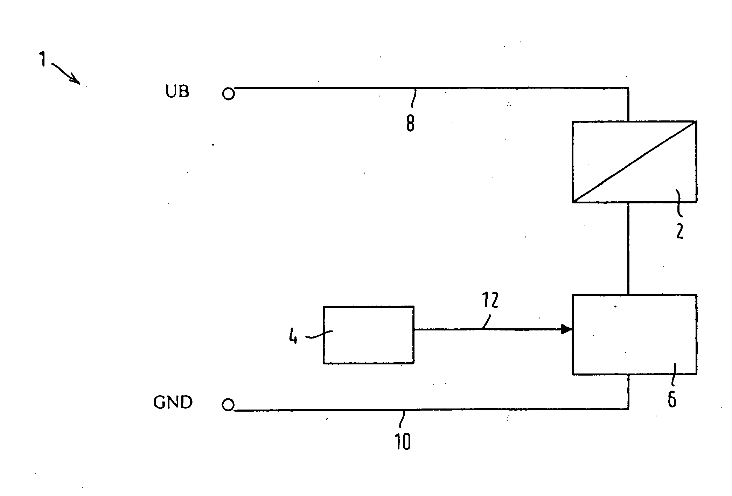

Nachstehend ist ein Ausführungsbeispiel der Erfindung in der Zeichnung dargestellt und in der nachfolgenden Beschreibung näher erläutert. In der Zeichnung zeigt die einzige Figur ein ABS-Steuergerät eines Kraftfahrzeugs mit einem elektromagnetischen Schaltventil, welches nach einem Steuerverfahren gemäß einer bevorzugten Ausführungsform der Erfindung gesteuert wird.

Beschreibung des Ausführungsbeispiels

Von einem in der Figur insgesamt mit 1 bezeichneten ABS-Steuergerät eines Kraftfahrzeugs sind aus Übersichtlichkeitsgründen lediglich ein elektromagnetisches Schaltventil, vorzugsweise ein 2/2-Wegemagnetventil 2, welches zwischen einer Durchgangsstellung und einer Sperrstellung schaltbar ist, ein Microcontroller 4 sowie eine Endstufe 6, vorzugsweise eine Low-Side-Endstufe gezeigt. Das 2/2-Wegemagnetventil 2 ist stellvertretend für weitere in dem Steuergerät 1 verbaute Magnetventile.

Das Steuergerät 1 ist über elektrische Leitungen 8, 10 an eine Spannungsquelle UB und an Erde GND angeschlossen. Weiterhin steuert der Microcontroller 4 über eine Signalleitung 12 die Endstufe 6 an, welche wiederum wenigstens eine Spule des Schaltventils 2 be- oder entstromt. Anstatt eines elektromagnetischen Schaltventils 2 könnte in dem Steuergerät 1 auch ein Proportionalventil verbaut sein, dessen Anker abhängig von der Höhe des in ihn eingesteuerten Stromes mehrere Stellungen einnehmen kann.

Das 2/2-Wegemagnetventil 2 beinhaltet in bekannter Weise weiterhin einen nicht gezeigten Anker, welcher auf eine Schaltanforderung hin durch Bestromung der Spule mit einem Erregerstrom oberhalb einer gewissen Erregerstromschaltschwelle gegen die Wirkung einer Rückstellfeder eine Stellung einnimmt, in welcher er beispielsweise einen Ventilsitz verschließt und das Ventil 2 folglich in Sperrstellung bringt. Zum Halten des Ankers in Sperrstellung ist ein gegenüber der Erregerstromschaitschwelle geringerer Strom notwendig. Beispielsweise benötigt die Spule einen Strom von 2,3 Ampere bei Raumtemperatur, um das Ventil 2 von der Durchgangsstellung in die Sperrstellung zu schalten: Zum Haften des Ankers in der Sperrstellung sind dagegen lediglich 0,7 Ampere bei Raumtemperatur erforderlich.

Bei entstromter Spule wird die auf den Anker wirkende magnetische Kraft aufgehoben, so dass dieser von der Rückstellfeder in seine Ausgangsstellung zurückgestellt wird, in welcher er den Ventilsitz freigibt und das Ventil in seine Durchgangsstellung schaltet. Umgekehrt könnte das 2/2-Wegemagnetventil 2 auch so ausgebildet sein, dass es bestromt in Durchgangsstellung und entstromt in Sperrstellung schaltet. Solche Magnetventile 2 sind hinlänglich bekannt, deshalb soll hier nicht weiter darauf eingegangen werden.

Gemäß eines Verfahrens zur Ansteuerung des 2/2-Wegemagnetventils 2 wird es auch wenn keine Anforderung zum Stellen oder zum Halten des Ankers vorliegt, zumindest zeitweise mit einem Erregerstrom größer als Null, aber unterhalb der Erregerstromschaltschwelle beaufschlagt. Mit anderen Worten wird die dem 2/2-Wegemagnetventil zugeordnete Endstufe 6 durch den Mikrocontroller 4 derart angesteuert, dass die Spule des 2/2-Wegemagnetventils 2 auch dann zumindest zeitweise mit einem Strom größer als Null aber kleiner als die Erregerstromschaltschwelle versorgt wird, wenn kein Umschalten des Ventils 2 oder ein durch Bestromung bedingtes Halten in einer Schaltstellung gefordert ist. Dabei ist also darauf zu achten, dass der Strom nicht die Erregerstromschaltschwelle überschreitet und so groß wird, dass das 2/2-Wegemagnetventil 2 umschaltet.

Denn die Bestromung der Spule des Magnetventils 2 erfolgt einzig zu dem Zweck, Wärme in deren Windungen zu erzeugen, wodurch ihr ohm'scher Widerstand ansteigt, was wiederum geringere Ströme durch die Spule zur Folge hat.

Der ohm'sche Widerstand R einer Spule abhängig von der Temperatur T kann durch die folgende Gleichung (1) beschrieben werden:

$$R(T) = R_{20} \cdot [\, 1 + \alpha(T - 20)]$$

mit

a :     Temperaturkoeffizient des elektrischen Widerstands,

T :     Temperatur In °C,

$R_{20}$:     Ohm'scher Widerstand der Spule bei 20 °C

Wenn das Steuergerät 1 mit dem Magnetventil 2 in einem im Freien stehenden Kraftfahrzeug angeordnet ist, kann davon ausgegangen werden, dass die Temperatur T der Spule annähernd gleich der Umgebungstemperatur ist.

Die Bestromung der Spule des Magnetventils 2 unterhalb der Erregerstromschaltschwellen zum Zwecke der Widerstandserhöhung erfolgt temperaturabhängig, vorzugsweise dann, wenn die Umgebungstemperatur eine gewisse untere Grenztemperatur unterschreitet. Wenn beispielsweise die Spule mit einem Erregerstrom geringfügig unterhalb der Erregerstromschaltschwelle von ca. 2,4 Ampere bestromt wird, steigt die Temperatur der Spule innerhalb von ca. 240 Sekunden von einer Umgebungstemperatur von minus 40 °C auf 0 °C. Dabei erhöht sich der Widerstand der Spule gemäß Gleichung (1), wodurch der sie durchfließende Strom sinkt.

Erfindungsgemäß erfolgt die Beaufschlagung der Spule mit einem Erregerstrom unterhalb der Erregerstromschaltschwelle in einem gewissen Zeitabstand nach Beenden einer Haltephase, während welcher der Anker durch einen relativ geringen Strom das 2/2-Wegemagnetventil 2 beispielsweise in Sperrstellung hält. Dann ist sichergestellt, dass der Anker durch die Wirkung der Rückstellfeder wieder in seine Ausgangsstellung zurückgekehrt ist und die Haltephase durch den Erregerstrom nicht beeinflusst wird.

In diesem Sinne erfolgt die Beaufschlagung der Spule mit dem Erregerstrom zu Heizzwecken vorzugsweise vor einer ersten funktionsbedingten Ansteuerung, wenn die Temperatur des Ventils gleich der Umgebungstemperatur ist. Die Bestromung der Spule zu Heizzwecken kann beispielsweise durch Einschalten der Zündung bei einem Kraftfahrzeug ausgelöst werden.

Das Verfahren gemäß der Erfindung ist nicht auf elektromagnetische Ventile in Bremsanlagen von Fahrzeugen beschränkt, sondern kann für jegliche, tiefen Temperaturen ausgesetzte elektromagnetische Ventile verwendet werden, beispielsweise für Ventile in Getriebesteuerungen, Retardersteuerungen oder Motorsteuerungen von Fahrzeugen.

Besonders bevorzugt werden elektromagnetische, einen Druckmittelfluss wie pneumatische oder hydraulische Druckmittel steuernde Ventile mittels des Verfahrens gesteuert.

Bezugszeichenliste

| | |
|---|---|
| 1 | ABS-Steuergerät |
| 2 | 2/2-Wegemagnetventil |
| 4 | Microcontroller |
| 6 | Endstufe |
| 8 | elektrische Leitung |
| 10 | elektrische Leitung |
| 12 | Signalleitung |

## Patentansprüche

1. Verfahren zur Ansteuerung wenigstens eines elektromagnetischen Ventils (2) beinhaltend wenigstens eine mittels eines Erregerstroms erregbare Spule und einen Anker, wobei der Erregerstrom derart einstellbar ist, dass er auf ein Signal zum Stellen des Ankers von einer Stellung in eine andere Stellung hin die Ankerbewegung durch Überschreiten einer Erregerstromschwelle hervorruft und zum Halten des Ankers in einer bestimmten Stellung auf einem demgegenüber niedrigeren Wert gehalten wird, **dadurch gekennzeichnet, dass** zum Zwecke der Erhöhung des Ohm'schen Widerstands der Spule das elektromagnetische Ventil auch wenn kein Signal zum Stellen oder zum Halten des Ankers vorliegt, zumindest zeitweise mit einem Erregerstrom größer als Null, aber unterhalb der Erregerstromschwelle beaufschlagt wird, wobei die Beaufschlagung der Spule mit dem Erregerstrom in einem gewissen Zeitabstand nach Beenden einer Haltephase des Ankers erfolgt.

2. Verfahren nach Anspruch 1, **dadurch gekennzeichnet, dass** die Beaufschlagung der Spule mit einem Erregerstrom unterhalb der Erregerstromschwelle abhängig von der Umgebungstemperatur erfolgt.

3. Verfahren nach wenigstens einem der vorhergehenden Ansprüche, **dadurch gekennzeichnet, dass** die Beauschlagung der Spule mit einem Erregerstrom unterhalb der Erregerstromschwelle vor einer ersten funktionsbedingten Ansteuerung des Ventils erfolgt, wenn die Temperatur des Ventils gleich der Umgebungstemperatur ist.

4. Verfahren nach wenigsten einem der vorhergehenden Ansprüche, **dadurch gekennzeichnet, dass** die Beauschlagung der Spule mit einem Erregerstrom unterhalb der Erregerstromschwelle eine bestimmte Zeitdauer lang erfolgt.

5. Verfahren nach Anspruch 4, **dadurch gekennzeichnet, dass** die Zeitdauer abhängig von der Umgebungstemperatur ist.

## Claims

1. A method for actuating at least one electromagnetic valve (2) containing at least one coil which can be excited by means of an exciting current, and an armature, wherein the exciting current can be set in such a manner that, in response to a signal for actuating the armature from one position into another position, it causes the armature to move as a result of an exciting current threshold being exceeded, and is kept at a value which is lower by comparison in order to hold the armature in a specific position, **characterized in that**, for the purpose of increasing the ohmic resistance of the coil, an exciting current which is greater than zero but is below the exciting current threshold is applied, at least temporarily, to the electromagnetic valve even if no signal for actuating or for holding the armature is present, the exciting current being applied to the coil at a certain time interval after a holding phase of the armature is ended.

2. The method as claimed in claim 1, **characterized in that** an exciting current below the exciting current threshold is applied to the coil as a function of the ambient temperature.

3. The method as claimed in at least one of the preceding claims, **characterized in that** an exciting current below the exciting current threshold is applied before a first functionally induced actuation of the valve, when the temperature of the valve is equal to the ambient temperature.

4. The method as claimed in at least one of the preceding claims, **characterized in that** an exciting current below the exciting current threshold is applied to the coil for a certain period of time.

5. The method as claimed in claim 4, **characterized in that** the period of time is dependent on the ambient temperature.

## Revendications

1. Procédé à commander au moins une soupape électromagnétique (2) comprenant au moins une bobine activable moyennant un courant d'excitation et un induit, audit courant d'excitation étant réglable d'une telle manière, qu'en réponse à un signal à positionner ledit induit d'une position en une autre position, il induise le mouvement dudit induit pneumatique, en surpassant un seuil de courant d'excitation, et qu'il soit maintenu à un niveau inférieur, relativement audit seuil, afin de maintenir ledit induit en une position définie, **caractérisé en ce que**, pour une augmentation de la résistance ohmique de ladite bobine, ladite soupape électromagnétique est soumise à un courant d'excitation à un niveau supérieur que zéro, mais inférieur audit seuil de courant d'excitation, au moins par intermittence, même quand un signal n'est pas présent pour le réglage ou le maintien dudit induit, à cette alimentation du courant d'excitation à ladite bobine se réalisant après un certain intervalle de temps suivant la terminaison d'une phase de maintien de l'induit.

2. Procédé selon la revendication 1, **caractérisé en ce que** l'alimentation du courant d'excitation à ladite bobine se réalise au-dessous dudit seuil de courant d'excitation, indépendamment de la température ambiante.

3. Procédé selon au moins une quelconque des revendications précédentes, **caractérisé en ce que** l'alimentation du courant d'excitation à ladite bobine se réalise au-dessous dudit seuil de courant d'excitation avant une première action de commande de ladite soupape, causée par la fonction, quand la température de ladite soupape est égale à la température ambiante.

4. Procédé selon au moins une quelconque des revendications précédentes, **caractérisé en ce que** l'alimentation du courant d'excitation à ladite bobine au-dessous dudit seuil de courant d'excitation se réalise pour un intervalle de temps défini.

5. Procédé selon la revendication 4, **caractérisé en ce que** ledit intervalle de temps fait fonction de la température ambiante.

EP 1 981 747 B1

1

UB

8

2

4

12

6

GND

10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19742038 A1
- WO 9419810 A
- EP 0933274 A2
- DE 10059348 A1